# DEMANDE DE BREVET EUROPEEN

(11) **EP 0 532 399 A1**
(43) Date de publication de la demande: **17.03.1993**
(21) Numéro de dépôt: 92402441.7
(22) Date de dépôt: 07.09.1992
(51) Int. Cl.: F16B 11/00, B05B 15/04

(54) **Procédé d'encollage de pièces en polystyrène expansé et installation pour sa mise en oeuvre**

(30) Priorité: 09.09.1991 FR 9111095
(71) Demandeur: SOCIETE ANONYME DES FONDERIES ET ATELIERS DE MOUSSEROLLES, F-64100 Bayonne (FR)
(72) Inventeur: Mailharin, Gérard, F-64990 Villefranque (FR)
(74) Mandataire: Epstein, Henri

(57) **Abrégé**

Procédé d'encollage des pièces en polystyrène expansé par pulvérisation de colle en solution aqueuse consistant à protéger les parties du support sur lequel est placée la pièce à encoller au moyen d'un film ou d'une couche d'eau, dont le niveau n'atteint pas celui du plan de colle, de façon à protéger la surface du support de l'encrassement par dépôt de colle.

Installation comprenant un support 30 présentant une empreinte pour la saisie et le prépositionnement de la pièce à encoller 5 et plongé dans un réservoir d'eau 16 équipé de moyens d'alimentation 9, 26 et de vidange d'eau et d'évacuation de trop plein 17, 13, de moyens de contrôle du niveau 19 actionnant lesdits moyens d'évacuation de trop plein et de moyens de pulvérisation de colle 21, 22.

Application à l'assemblage de demi-coquilles pour la fabrication de modèles de fonderie pour moulage du type à modèle perdu.

## Description

La présente invention se rapporte à un procédé d'assemblage en série par collage des pièces en polystyrène expansé par pulvérisation d'une colle en solution, émulsion ou suspension aqueuse et à des installations pour sa mise en oeuvre et plus particulièrement à des installations d'encollage.

Le procédé de collage de pièces en polystyrène expansé par pulvérisation d'une colle soluble dans l'eau est particulièrement bien adapté, lorsqu'on souhaite contrôler avec précision l'épaisseur et l'homogénéité de dépôt de colle et éviter ainsi toute formation de bourrelets le long du joint d'assemblage.

Un tel procédé appliqué à l'assemblage de demi-coquilles en polystyrène expansé pour la fabrication de modèles de fonderie pour moulage du type à modèle perdu fait l'objet d'une demande de brevet déposée ce jour par la demanderesse.

Selon ce procédé, on pulvérise une colle acrylique en émulsion ou en suspension aqueuse sur les parties à encoller en couvrant toute la surface du joint avec un grammage ne dépassant pas 15 g/m², on sèche l'adhésif par balayage à air chaud et on assemble par contact les pièces constituant le modèle.

De tels procédés présentent des inconvénients, lorsqu'on utilise des caches ou des masques pour préserver les zones ne devant pas être encollées de l'encrassement par dépôt de colle. En effet, le masque est inadapté aux surfaces d'encollage courbes, son emploi permet rarement d'obtenir des arêtes vives et il fait rebondir les gouttelettes de colle pulvérisée.

Son plus grand inconvénient est son encrassement, ce qui nécessite le changement du masque d'autant plus fréquent, que le travail en série exige des cadences plus élevées.

Le procédé selon la présente invention vise à remédier à l'inconvénient de l'emploi d'un masque conventionnel en supprimant son utilisation.

Selon l'invention, le procédé d'assemblage en série par collage de pièces en polystyrène expansé, dont les parties à encoller émergent au dessus de la surface du support desdites pièces, par pulvérisation d'une colle en solution, en émulsion ou en suspension aqueuse, est caractérisé en ce qu'on maintient au dessus de la surface du support un film ou une couche d'eau, dont le niveau n'atteint pas celui des faces des pièce à encoller formant le plan de colle, de façon à protéger la surface du support de l'encrassement par dépôt de colle.

Par "support de pièces" on entend toutes les parties de la machine d'encollage environnant la pièce en cours d'encollage et qui seraient susceptibles d'offrir leur surface au dépôt indésirable de colle.

On crée ainsi une protection hydraulique des parties à protéger de l'encrassement, les gouttelettes recueillies dans l'eau sont facilement évacuées en laissant la surface des parties ainsi protégées propre et sans bavures.

Selon une application avantageuse du procédé de l'invention, on assemble par ce procédé des demi-coquilles en polystyrène expansé pour la fabrication de modèle de fonderie pour moulage du type à modèle perdu.

L'invention a également pour objet une installation pour la mise en oeuvre du procédé ci-dessus, qui est caractérisée en ce qu'elle comprend un support de la pièce à encoller placé dans un réservoir d'eau, des moyens d'alimentation et de vidange d'eau et d'évacuation du trop-plein, des moyens de contrôle du niveau d'eau dans le réservoir actionnant lesdits moyens d'évacuation de trop-plein d'eau et des moyens de pulvérisation de colle placés au dessus du support.

Les moyens de contrôle du niveau d'eau dans le réservoir comprennent de préférence un détecteur de niveau commandant l'évacuation de trop-plein.

Le support de la pièce est avantageusement un bloc muni d'une empreinte pour la saisie et le prépositionnement de la pièce à encoller.

Compte tenu de la faible densité du polystyrène expansé, le support de la pièce contient des moyens de retenue de pièces, tels qu'un vérin de serrage de la pièce.

L'invention vise également une installation d'assemblage pour la mise en oeuvre du procédé selon l'invention et comprenant un poste d'encollage tel que décrit ci-dessus, laquelle installation d'assemblage est caractérisée en ce qu'elle comprend un plateau portant le bloc avec empreinte pour la saisie de la pièce et tournant avec arrêts à des postes de travail, surmonté d'une tourelle servant de support aux raccordements de fluides alimentés par des dispositifs fixes placés au dessus de chaque poste de travail et pourvus de moyens de translation verticale, tels qu'un vérin pneumatique.

L'installation d'assemblage comprend avantageusement, dans l'ordre, un poste de chargement de la pièce à encoller dans l'empreinte du bloc porté par le plateau tournant, le poste d'encollage, un poste d'étuvage à air chaud et un poste d'assemblage de la demi-coquille encollée à une autre demi-coquille.

De préférence, les raccordements supportés par la tourelle tournante sevent à alimenter le réservoir en eau et des vérins pneumatiques, tels que les vérins commandant les vannes d'alimentation et de vidange d'eau, le vérin commandant le serrage de la pièce à encoller dans l'empreinte du bloc de saisie, le vérin d'assemblage des pièces après encollage, le vérin de translation verticale des buses de pulvérisation de colle et autres.

D'autres caractéristique du procédé et de l'installation selon l'invention apparaitront à la lumière de la description qui suit d'un mode de réalisation qui porte à titre d'exemple sur une installation d'encollage réalisée au sein d'une installation d'assemblage des demi-coquilles en polystyrène expansé servant de modèle de fonderie du type à modèle perdu.

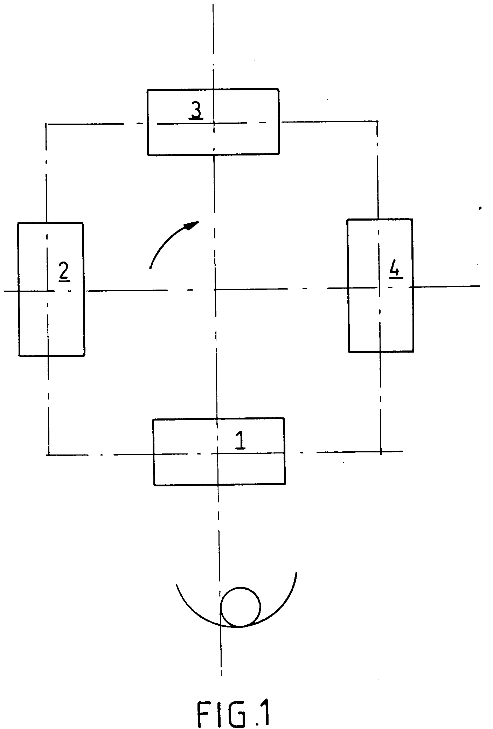

Une telle installation d'assemblage est représentée aux dessins annexes, dont
la figure 1 montre schématiquement la répartition de postes de travail sur le parcours circulaire d'un plateau tournant,
la figure 2 montre schématiquement en coupe diamétrale deux postes de travail, et

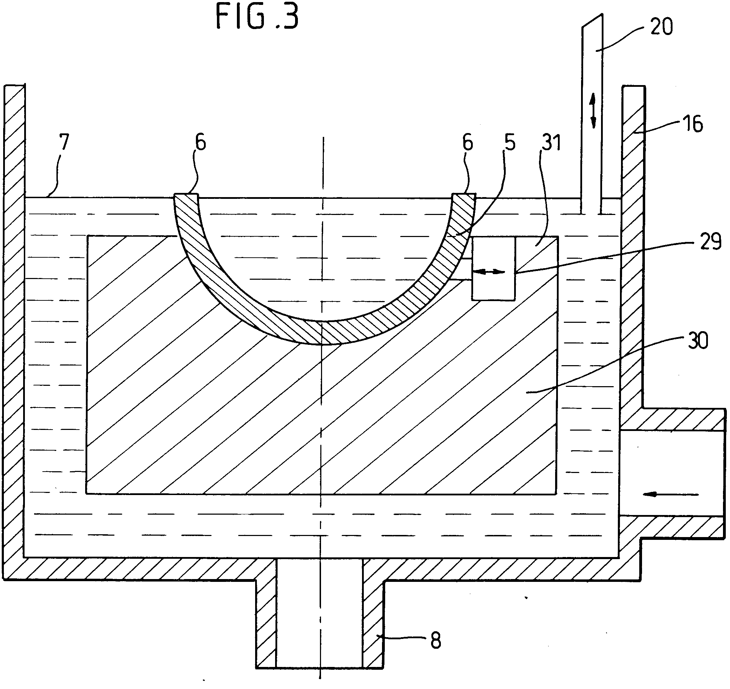

la figure 3 présente en vue agrandie en coupe de support portant la pièce en position d'encollage.

L'installation d'encollage selon l'invention fait partie d'une installation d'assemblage comprenant quatre postes de travail: le chargement de la pièce (poste 1), l'encollage (poste 2), l'étuvage (poste 3) et l'assemblage (poste 4).

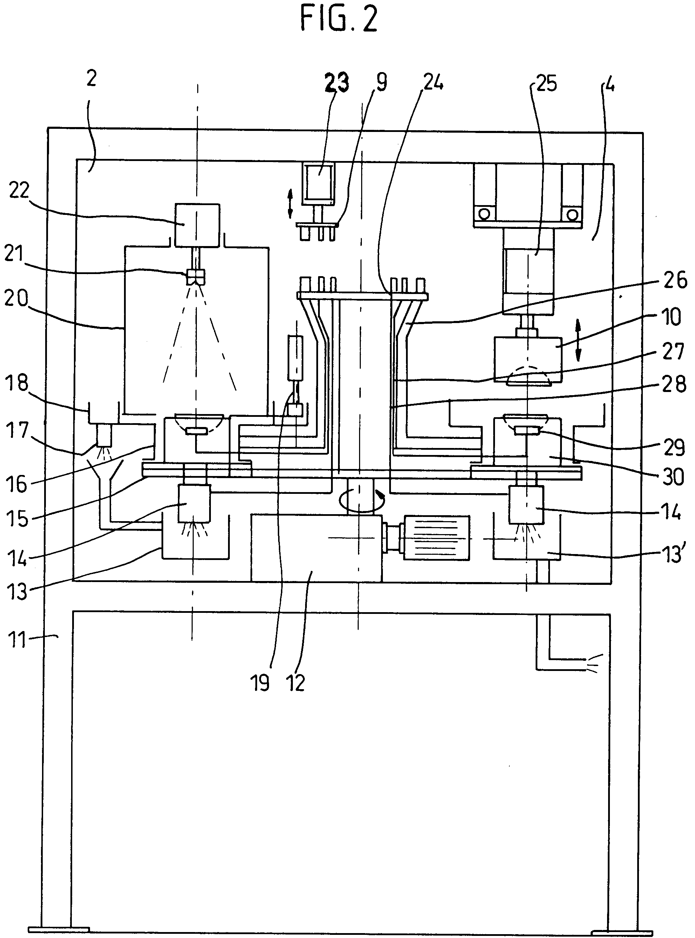

A la figure 2 sont représentés les deux postes de travail placés de façon diamétralement opposée: le poste d'encollage 2 est le poste d'assemblage 4.

A l'intérieur d'un bâti 11 tourne un plateau 15 actionné par un moteur 12 avec arrêt à chaque poste de travail.

Ce plateau porte un bloc 30 muni d'une empreinte pour la saisie et le prépositionnement d'une demi-coquille 5 dont il s'agit de revêtir de colle la tranche 6 émergeant legèrement au dessus de la face supérieure 31 du bloc 30. Le bloc 30 est placé dans un réservoir 16 alimenté en eau, dont le niveau 7 est minutieusement réglé, de façon à se situer au dessus de la face supérieure 31 du bloc 30, mais en dessous du niveau de la tranche 6 de la pièce 5 à encoller. Le bloc 30 est relié par un embout 8 passant par dessous le plateau 15 à une auge de récupération d'eau 13 par l'intermédiaire d'une vanne 14 de vidange du réservoir.

Au sommet de l'enceinte de pulvérisation entourée par des parois escamotables 20 est placé un pulvérisateur de colle dont les buses 21 peuvent être relevées au moyen d'un vérin 22.

Le plateau tournant 15 porte à son centre un tourelle 24 supportant des conduites d'eau 26 d'alimentation du réservoir 30, d'air 27 commandant la vanne 14 de vidange du réservoir 30 et d'air 28 commandant le vérin 29 d'actionnement de moyens de retenue par serrage ou par aspiration de la pièce

Au dessus de chaque poste de travail est placé un dispositif 9 déplaçable verticalement au moyen d'un vérin 23 et qui alimente les conduites de la tourelle 26, 27 et 28.

En 19 est représenté le détecteur de niveau d'eau dans le réservoir 16.

Ce détecteur, fonctionnant comme un contacteur de niveau, commande l'arrêt d'alimentation en eau et l'évacuation du trop-plein vers le récipient 17 et le récipient du trop-plein de sécurité 18.

Le poste 3 est un poste où s'opère le chauffage de la couche de colle déposée au poste 2 en vue de son figeage pour éviter tout coulage.

Au poste d'assemblage 4, le bac 30 est positionné en regard d'un bloc de saisie 10 de la demi-coquille à assembler avec la demi-coquille 5 encollée.

La vanne de vidange 14 est positionnée au dessus d'un auge 13′ d'évacuation d'eau remplissant le réservoir 30.

Le dispositif de support 25 du bloc 10 est descendu à l'aide du vérin, pour que s'exerce une légère pression sur la tranche 6 encollée de la demi-coquille 5 et la face correspondante de l'autre demi-coquille.

Le fonctionnement de l'installation est le suivant.

Le bloc 30 plongé dans le réservoir 16 se trouvant devant le poste de chargement 1, on place une demi-coquille dans l'empreinte du bloc 30 et on actionne le vérin de serrage 29 pour retenir la demi-coquille.

On fait passer le bloc 30 au poste 2 d'encollage et on fait remplir d'eau le réservoir 16, le détecteur 19 veillant à ce que le niveau d'eau soit suffisant pour couvrir d'une couche d'eau la surface supérieure plane du bloc 30, mais n'atteigne pas le niveau de la face de la tranche 6 à encoller de la demi-coquille.

L'automatisme de ce réglage de niveau est assuré par le distributeur des fluides d'alimentation et de commande 9 et par le jeu de vérins pneumatiques actionnant les vannes d'évacuation de trop-plein 27 et 28.

On fait descendre au moyen du vérin 22 les buses de pulvérisation 21 et on actionne la marche du pulvérisateur.

Lorsque l'opération de pulvérisation est terminée, le bloc 30 passe au poste d'étuvage 3, où l'air chaud assure le figeage de la colle.

Le bloc 30 passant au poste d'assemblage 4, on actionne la vanne d'évacuation d'eau du réservoir 16, qui s'écoule dans l'auge 13′, puis on abaisse le bloc 10 portant l'autre demi-coquille pour assurer le collage par contact des deux demi-coquilles.

En faisant relâcher l'action du vérin de serrage 29 on libère les deux demi-coquilles assemblées.

Le procédé selon l'invention permet de supprimer l'emploi des masques, ce qui se traduit par un économie importante, notamment en ce qui concerne les frais d'outillage et de manutention.

Il présente un grand avantage d'éliminer tout risque d'encrassement des parties de la machine d'encollage, la solubilité de la colle dans l'eau constituant la protection hydraulique et l'entrainement des gouttelettes déposées lors du vidange garantissent l'absence d'encrassement et un grande simplicité de fonctionnement.

L'invention n'est pas limitée au mode de réalisation présenté à titre d'exemple.

De nombreuses variantes et de nombreux perfectionnements peuvent être envisagés sans sortir du cadre de l'invention, améliorant notamment la précision et la rapidité du réglage du niveau d'eau en fonction du niveau du plan d'encollage.

Grâce à de tels perfectionnements, pouvant comprendre également l'automatisation complète du fonctionnement et la robotisation des tâche, telles que le chargement et le déchargement des pièces, des cadences très élevées peuvent être atteintes dans les installations appliquant le principe de la présente invention.

## Revendications

1. Procédé d'assemblage en série par collage des pièces en polystyrène expansé, dont les parties à encoller émergent au dessus de la surface du support desdites pièces, par pulvérisation d'une colle en solution, en émulsion ou en suspension aqueuse, caractérisé en ce qu'on maintient au dessus de la surface du support (30) un film ou une couche d'eau, dont le niveau n'atteint pas celui des faces (6) des pièces à encoller formant le plan de colle, de façon à protéger la surface du support de l'encrassement par dépôt de colle.

2. Procédé selon la revendication 1, caractérisé en ce qu'on assemble des demi-coquilles en polystyrène expansé pour la fabrication de modèle de fonderie pour moulage du type à modèle perdu.

3. Installation d'encollage pour la mise en oeuvre du procédé selon la revendication 1 ou 2, caractérisée en ce qu'elle comprend un support (30) de la pièce à encoller placé dans un réservoir d'eau (16), des moyens d'alimentation (9,26) et de vidange d'eau et d'évacuation du trop-plein (17,13), des moyens de contrôle du niveau d'eau (19) dans le réservoir actionnant lesdits moyens d'évacuation de trop-plein d'eau et des moyens de pulvérisation de colle (21,22) placés au dessus du support.

4. Installation selon la revendication 3, caractérisée en ce que les moyens de contrôle du niveau d'eau (19) dans le réservoir comprennent un détecteur de niveau commandant l'évacuation de trop-plein.

5. Installation selon la revendication 3, caractérisé en ce que le support de la pièce est un bloc (30) présentant une empreinte pour la saisie et le prépositionnement de la pièce à encoller (5).

6. Installation selon la revendication 3 ou 5, caractérisé en ce que le support (30) de la pièce à encoller (5) contient des moyens de retenue de ladite pièce (29), tels qu'un vérin pneumatique de serrage de la pièce.

7. Installation d'assemblage pour la mise en oeuvre du procédé selon la revendication 2 et comprenant un poste d'encollage selon l'une des revendication 3 à 6, caractérisé en ce qu'elle comprend un plateau (15) portant le bloc (30) avec empreinte pour la saisie de la pièce et tournant avec arrêts à des poste de travail, surmonté d'une tourelle (24) servant de support aux raccordements de fluides (26,27,28) alimentés par des dispositifs fixes (9) placés au dessus de chaque poste de travail et pourvu de moyens de translation verticale, tels qu'un vérin pneumatique (23).

8. Installation selon la revendication 7, caractérisée en ce qu'elle comprend, dans l'ordre, un poste de chargement (1) de la pièce à encoller dans l'empreinte du bloc porté par un plateau tournant (15), le poste d'encollage (2), un poste d'étuvage à air chaud (3) et un poste d'assemblage (4) de la demi-coquille encollée à une autre demi-coquille.

9. Installation selon la revendication 7, caractérisée en ce que les raccordements (26,27,28) supportés par la tourelle tournante (24) servent à alimenter le réservoir (16) en eau et des vérins pneumatiques, tels que les vérins commandant les vannes d'alimentation et de vidange d'eau, le vérin commandant le serrage (29) de la pièce à encoller dans l'empreinte du bloc de saisie, le vérin d'assemblage (25) des pièces après encollage, le vérin de translation verticale (22) des buses de pulvérisation de colles et autres.
